# EUROPEAN PATENT APPLICATION

(11) **EP 2 336 584 A2**
(43) Date of publication of application: **22.06.2011**
(21) Application number: 10015749.4
(22) Date of filing: 17.12.2010
(51) Int. Cl.: F16C 25/06

(54) **Integrated bearing assembly**

(30) Priority: 18.12.2009 US 287993 P
(71) Applicant: Mauro, George, Salem, NH 03079 (US)
(72) Inventor: Mauro, George, Salem, NH 03079 (US)
(74) Representative: Watts, Peter Graham

(57) **Abstract**

An integrated bearing assembly comprising first and second cylindrical members (32,12) radially spaced apart from one another along an axis of rotation. The first cylindrical member supports a first portion of a first bearing track while the second cylindrical member supports a second portion of the first bearing track. The first and the second portions face one another and a plurality of bearing elements (28) are retained therein to facilitate relative rotation. At least one of the first and second portions comprises a pair of adjacent V-shaped bearing surfaces (16,18). One of the first and the second cylindrical members supports a retaining element which has a bearing surface that forms at least a portion of one of the first and second portions of the first bearing track. The retaining element is adjustable (52), in a direction parallel to the axis of rotation, to adjust a pressure to be applied to the plurality of captively retained bearing elements (28).

## Description

### INTEGRATED BEARING ASSEMBLY

### FIELD OF THE INVENTION

This invention relates to integrated bearing assemblies for use in, for example, high precision, moderate to low load and moderate to low speed rotational positioning tables, and, in particular, to bearing assemblies employing conventional, standard ball bearings where the bearings are integrated into the body of a device during assembly of the device.

### BACKGROUND OF THE INVENTION

Bearings of various forms, such as conventional ball thrust bearings, radial bearings, straight or crossed roller bearings, angular contact bearings, tapered roller bearings, roller thrust bearings, and so on, are commonly employed in various high precision positioning devices, such as rotational positioning tables and goniometers.

The construction of bearings for such applications, however, generally suffer from a number of common problems, many of which arise from the need to design around and accommodate conventional, off the shelf bearings as well as design and construction restrictions and requirements imposed by the use of conventional bearings. For example, it is typically expensive and time consuming to customize conventional bearings for a given use, and such bearings require close dimensional tolerances for the bearing seating structures, highly precise shapes for the guide tracks in which the bearings rest, relatively high quality materials for the components, and relatively complex associated structures, such as seating sockets and flanges.

### SUMMARY OF THE INVENTION

The present invention addresses and provides solutions to these and other related problems of the prior art bearing assemblies, structures and tracks.

The primary objects and applications of the integrated bearing concept are (1) a dedicated high precision, low to moderate load and low to moderate speed rotational positioning table without the typical tradeoffs encountered by using conventional standard bearings that were fundamentally designed for other applications, and (2) the simplified customization and manufacture of a rotating shaft, such as used in a precision lead screw, ball bearing turn knob, ball bearing pulley, or virtually any rotatable shaft arrangement.

Another important object and purpose of the integrated bearing concept is to eliminate the need to design or modify off-the shelf conventional bearings which require highly precise mating seating features in order to adapt such bearings for a rotary table application while normally imposing unnecessary design constraints, such as final dimensions. Generally, it is quite expensive to customize conventional bearings, thereby making it prohibitively expensive to modify such bearing to the required dimensions and features of the desired end product.

Another object and benefit of the integrated bearing of the present invention is to provide a structure that can easily progress through prototype, pre-production and final production stages, at a substantially low cost and over a relatively short time period, thereby streamlining the development of custom configurations, as well as new related products, with minimal effort and cost.

A further object and benefit is to reduce the overall size, weight, and complexity of the final assembly of the integrated bearing by eliminating secondary features, such as seating socket(s) and possible flange allowance(s) conventionally required by standard bearing housings.

Still another object and benefit is that the integrated bearing does not suffer the loss of accuracy, associated with a standard bearing assembly, typically caused by pressing the bearing into a secondary socket with its own deformities which detract from rotational accuracy.

A further object and benefit is that a "flat" angular contact concept offers convenience, during the manufacturing operation, by avoiding the need to match curve surfaces, and thus requires less stringent and/or precise tolerances for the ball seating surface locations.

Yet another object and benefit is that, due to low impact, low wear and low pressure requirements, the integrated bearing can be made from machinable materials such as aluminum, brass, stainless, etc., without the need for a special hardening and/or grinding operation to improve the endurance of the integrated bearing.

Still another object and benefit is that hardened guide or riding surfaces, for ultra-precision applications, are simple conical surfaces having a very small surface area which, if needed, can be easily diamond turned to virtually any desired tolerance(s) following grinding.

A further object and benefit of the integrated bearing is that during assembly, a single preloading operation secures all motion constraints of the integrated bearing.

Still another object and benefit is that, due to avoidance of a secondary seating feature(s), the size of the through hole, relative to the outer housing, can be substantially larger in diameter than with a standard bearing.

A still further object and benefit is that during assembly, any eccentricity errors in the outer or inner bearing sections are reduced, or divided, rather than being increased or multiplied.

Yet another object and benefit is, even if a conventional relatively inexpensive bearing exists to fit a potential application, the associated cost of adapting the peripheral requirements for seating and installation of such conventional bearing normally offsets the cost benefit. The integrated concept of the present invention eliminates those redundancies.

It is therefore an object of the present invention to provide an integrated bearing structure that eliminates the need to design around off the shelf, conventional bearings and unnecessary design constraints, that reduces the need for tight tolerances, and that reduces the need for high quality materials and hardened surfaces.

A further object of the present invention is to provide integrated bearing structures of relatively low complexity and cost, by the elimination of the need for seating sockets, that adapt to and tolerate tolerances in dimensions and shape, and that facilitate prototype, pre-production, and final production stage design, fabrication, and assembly of the bearing structures, and which may also be used, for example, in miniaturized applications.

The essence of the present invention concept is that it uses essentially "flat" conical sections where the only curvature is the natural cone radius. These sections mate with one another to form one or more pairs of V-shaped surfaces or a corner(s), and are locked into place by a "ring" which can be fastened by a variety of different and conventional manners in order to facilitate applying a desired preload force to the bearings. By one of pushing, pressing, gluing, screwing, etc., of the "ring" in place, the balls are "preloaded" and kinematically forced into their only possible rotational positions along the rotational path of the bearing track. That is, the bearing is created as the body of the device is assembled. It is to be appreciated that the integrated bearing will typically have a conventional keeper(s) or cage(s), as with all ball bearing assemblies, which retain the balls at desired relative spacing from one another during operation of the integrated bearing assembly. These integrated configurations do the job of conventional ball thrust bearings, radial bearings, roller (crossed or straight) bearings, angular contact bearings, tapered roller bearings, roller thrust bearings, etc., most of which are required to be utilized in pairs in order to achieve a precision rotary table. It is to be appreciated that the term "essentially flat", as used within this disclosure, also contemplates utilization of a moderate amount of curvature without impairing the benefit of the assembly.

Generally the present invention relates to an integrated bearing assembly comprising: first and second cylindrical members radially spaced apart from one another about an axis of rotation with the first and second cylindrical members together defining a first bearing track therebetween; a plurality of bearing elements being retained within the first bearing track to facilitate relative rotation of the first and the second cylindrical members with respect to one another; the first bearing track being defined by at least first, second and third bearing surfaces, with two of the first, the second and the third bearing surfaces forming a pair of adjacent V-shaped bearing surfaces, one of the first, the second and the third bearing surfaces being supported by a retaining element, and the retaining element being adjustable, in a direction parallel to the axis of rotation, for adjusting a pressure to be applied to the plurality of bearings captively retained by the first bearing track.

The present invention is directed to an integrated bearing assembly comprising: first and second cylindrical members radially spaced apart from one another about an axis of rotation; the first cylindrical member supporting a first portion of a first bearing track and the second cylindrical member supporting a second mating portion of the first bearing track; the first and the second portions of the first bearing track being located adjacent to and facing one another to form the first bearing track, and a plurality of bearing elements being retained within the first bearing track to facilitate relative rotation of the first and the second cylindrical members with respect to one another; at least one of the first and second portions of the first bearing track comprising a pair of adjacent V-shaped bearing surfaces; and one of the first and the second cylindrical members supporting at least one adjustable retaining element having a bearing surface which forms at least a portion of one of the first and second portions of the first bearing track, and the at least one adjustable retaining element being adjustable, in a direction parallel to the axis of rotation, for adjusting a pressure to be applied to the plurality of bearings captively retained within the first bearing track.

The present invention is also directed to a method of assembling an integrated bearing assembly which facilitates rotation of first and second members relative to one another, the method comprising the steps of: axially spacing first and second cylindrical members apart from one another along an axis of rotation; supporting a first portion of a first bearing track, via the first cylindrical member, and supporting a second mating portion of the first bearing track, via the second cylindrical member; locating the first and the second portions of the first bearing track adjacent to and facing one another to form the first bearing track, and retaining a plurality of bearing elements within the first bearing track to facilitate relative rotation of the first and the second cylindrical members with respect to one another; at least one of the first and second members with respect to one another; at least one of the first and second portions of the first bearing track forming a pair of adjacent V-shaped bearing surfaces; and supporting at least one adjustable retaining element, having a bearing surface which forms at least a portion of one of the first and second portions of the first bearing track, via one of the first and the second cylindrical members, and adjusting a position of the at least one adjustable retaining element, in a direction parallel to the axis of rotation, for adjusting a pressure to be applied to the plurality of bearings captively retained within the first bearing track.

### BRIEF DESCRIPTION OF THE DRAWINGS

Various embodiments of the invention will now be described, by way of example, with reference to the accompanying drawings, in which:
Fig. 1 is a diagrammatic isometric view of a cylindrical integrated bearing of the present invention;
Fig. 2A is a diagrammatic cross sectional view of a partially assembled single track integrated bearing assembly with the single bearing track being defined by four bearing surfaces;
Fig. 2B is a diagrammatic cross sectional view of the completely assembled single track integrated bearing assembly of Fig. 2A;
Fig. 2C is a diagrammatic cross sectional view of a partially assembled double track integrated bearing assembly with each of the bearing tracks being defined by three bearing surfaces;
Fig. 2D is a diagrammatic cross sectional view of the completely assembled double track integrated bearing assembly of Fig. 2C;
Fig. 2E is a diagrammatic cross sectional view of another partially assembled single track integrated bearing assembly with the bearing track being defined by three bearing surfaces and a shoulder providing a fourth constraint;
Fig. 2F is a diagrammatic cross sectional view of the completely assembled single track integrated bearing assembly of Fig. 2E;
Figs. 3A, 3B, 3C and 3D are diagrammatic partial side views showing various modifications for supporting the retaining assembly in a desired position;
Fig. 4A is a diagrammatic cross sectional view of the integrated bearing of the present invention for use with a rotatable shaft, knob or sleeve, for example, with the single bearing track being defined by four bearing surfaces;
Fig. 4B is a diagrammatic cross sectional view, similar to Fig. 4A, showing a slight modification of the embodiment of Fig. 4A;
Fig. 4C is a diagrammatic cross sectional view of a further embodiment of the integrated bearing assembly, similar to Fig. 4A, for use with a rotatable shaft, knob or sleeve, for example;
Fig. 4D is a diagrammatic cross sectional view, somewhat similar to Fig. 4A, but of a dual integrated bearing assembly also for use with a rotatable shaft, knob or sleeve, for example, with one bearing track being defined by four bearing surfaces and the other bearing track being defined by three bearing surfaces;
Fig. 5 is a diagrammatic cross sectional view of the integrated bearing, according to the present invention, for a linear bearing embodiment with each of the bearing tracks being defined by three bearing surfaces;
Fig. 5A is a diagrammatic right end elevational view of the integrated bearing of Fig. 5;
Fig. 5B is a diagrammatic cross sectional view of the integrated bearing of Fig. 5 having only a single bearing track being defined by only three bearing surfaces and this embodiment provides three degrees of freedom;
Fig. 6 is a diagrammatic cross sectional view of the integrated bearing for a vertical stop bearing application with the bearing track being defined by three bearing surfaces and abutting surfaces providing a fourth constraint; and
Fig. 6A is a diagrammatic cross sectional view showing a modification of the integrated bearing of Fig. 6.

### DETAILED DESCRIPTION OF THE INVENTION

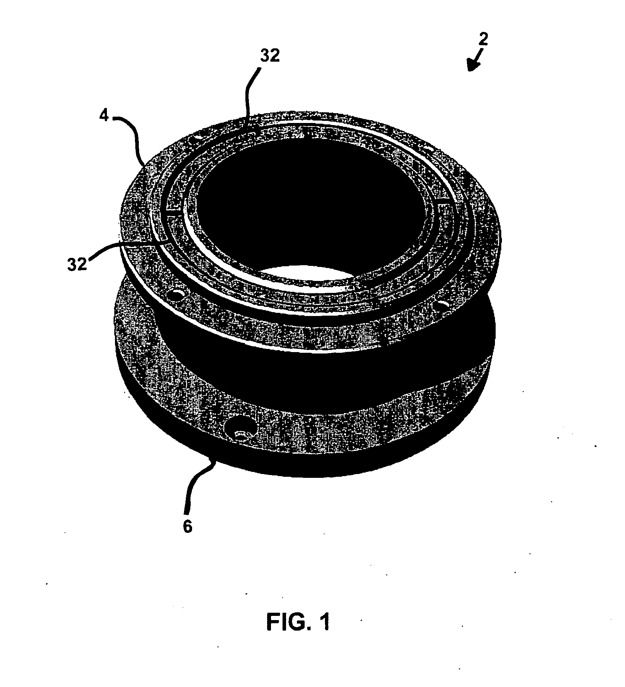

The invention will be described with reference to accompanying drawings. Turning first to Fig. 1 which is a diagrammatic isometric view of a cylindrical integrated bearing 2, according to the present invention, in which a mount 4 is rotationally mounted with respect to a second mount 6. Due to such arrangement, a first desired device, instrument, table, support surface, etc., (not shown) may be supported, attached or otherwise secured by conventional fasteners or the like (not shown), via the mounting apertures (not labeled), to the first mount 4 while a second desired device, instrument, table, support surface, etc., (not shown) may be supported, attached or otherwise secured by conventional fasteners or the like (not shown), via the mounting apertures (not labeled), to the second mount 6 in order to precisely position and control relative rotation of those two desired device, devices, instruments, tables, support surfaces, etc., once so mounted, with respect to one another via the cylindrical integrated bearing assembly 2 of the present invention. It is to be appreciated that the size, spacing and location of the mounting apertures, or the type of supporting mechanism, attaching mechanism or securing mechanism, can vary for application to application and would be readily apparent to those of ordinary skill in the art.

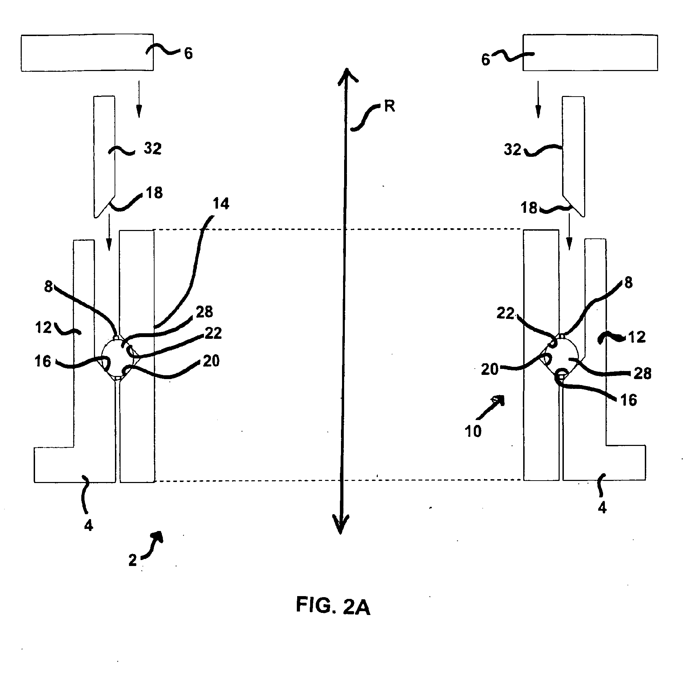

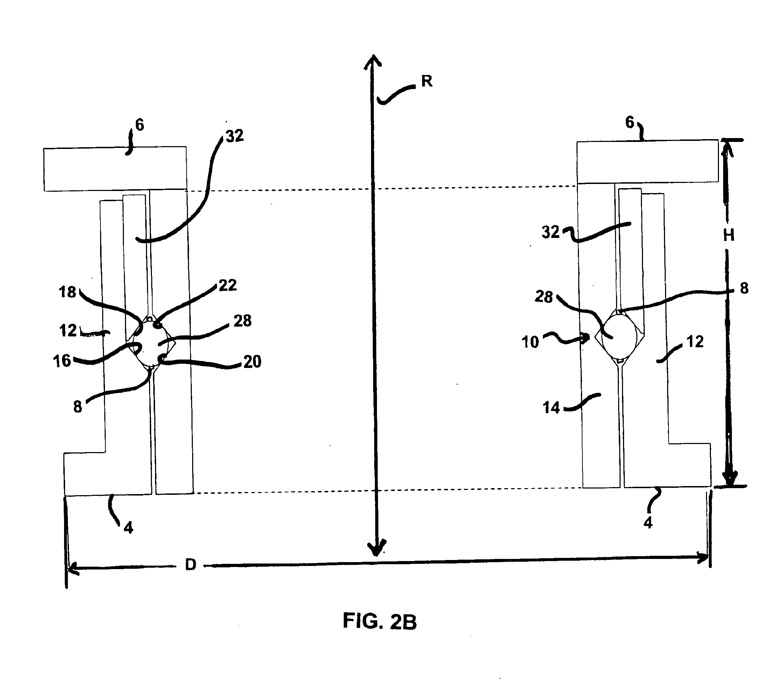

Now referring to Figs. 2A and 2B, a single track integrated bearing assembly 2 will now be described. According to the single track integrated bearing assembly 2 of Figs. 2A and 2B, a radially outer half or portion of the single bearing track 10 is formed by first and second annular outer bearing sections or surfaces 16, 18, at least one of which is formed in an inwardly facing surface of the radially outer first cylindrical member 12, which is generally integral with or attached to the first mount 4. A radially inner half or portion of the single bearing track 10 is formed by mating first and second inner bearing sections or surfaces 20, 22 formed in an outer surface of a radially inner second cylindrical member 14 which is to be connected with the second mount 6. The first and the second outer bearing sections or surfaces 16, 18 and the first and the second inner bearing sections or surfaces 20, 22 are aligned with and mate with one another so as to define the single bearing track 10 therebetween which captively retains a plurality of bearing elements 28 therein and that facilitate relative rotation of the first and the second cylindrical members 12, 14 with respect to one another and, in turn, relative rotation of the first and the second mounts 4, 6 with respect to one another.

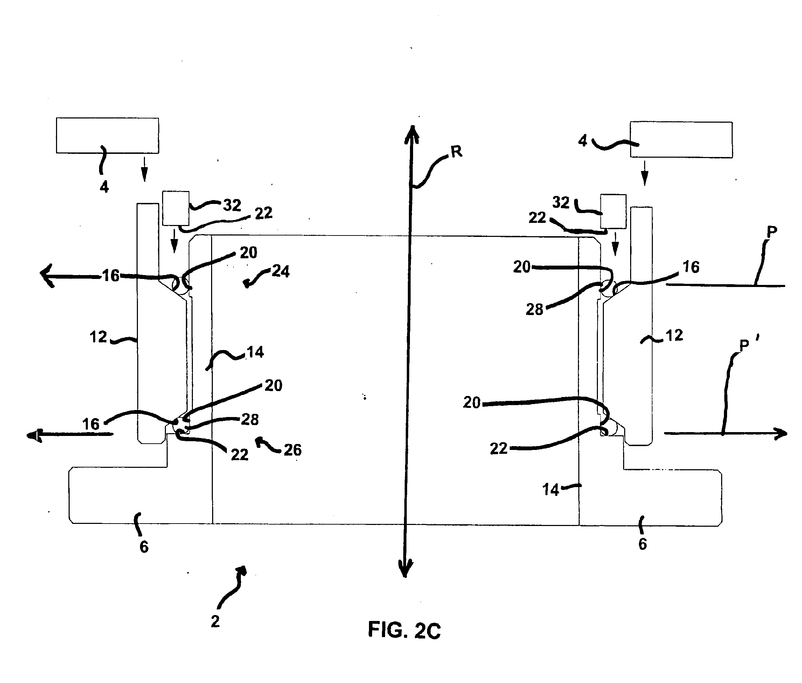

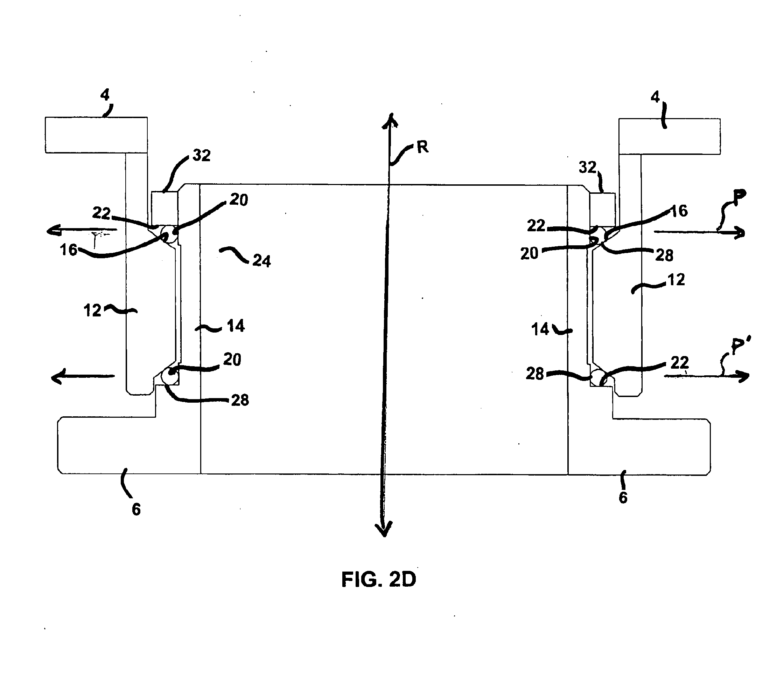

The single bearing track 10 contains and retains two or more bearing elements 28, typically a plurality of bearings, which engage with the mating bearing sections or surfaces 16, 18, 20 and/or 22 and facilitate rotation of the first and the second cylindrical members 12, 14 with respect to one another and thus rotation of the first and the second mount 4, 6 with respect to one another. A cross section of the bearing track 10 is determined by the shapes of the bearing sections or surfaces 16, 18, 20 and 22 formed in the first and the second cylindrical members 12, 14. According to this embodiment, the single bearing track 10 is formed by generally four flat or conical bearing sections or surfaces 16, 18, 20 and 22 and the surfaces are arranged to form a pair of adjacent V-shaped bearing surfaces, as illustrated in Figs. 2A and 2B for example, or may have mutually perpendicular flat walls and surfaces, or may have one sloping wall and one flat wall, as illustrated in Figs. 2C and 2D. The arrangement of walls and surfaces depends upon the overall design, machining and/or assembly requirements of the integrated bearing assembly 2 and/or the type of bearing elements 28 to be employed, such as ball or cylindrical bearings.

As indicated above, the first cylindrical member 12 is either integral with or secured to the first mount 4 in a conventional fashion, while the second cylindrical member 14 is either integral with or secured to the second mount 6 in a conventional fashion.

As shown in Fig. 2B, each of the circumferential first and second outer bearing sections or surfaces 16, 18 generally faces toward the central axis of rotation R. The second cylindrical member 14 includes the second portion of the bearing track 10 which comprises the circumferentially adjacent first and second inner bearing sections or surfaces 20, 22 spaced axially apart along axis of rotation R. Each of the circumferential first and second inner bearing sections or surfaces 20, 22 generally faces away from the axis of rotation R.

As illustrated in Figs. 2A and 2B, the first portion of the bearing track 10, which comprises the first and the second outer bearing sections or surfaces 16, 18 of the first cylindrical member 12, and the second portion of the bearing track 10, which comprises the corresponding first and the second inner bearing sections or surfaces 20, 22 of the second cylindrical member 14, are located adjacent to and aligned with respect one another and are generally of opposing orientation with respect to the axis of rotation R of the bearing assembly 2. The corresponding pairs of the bearing sections or surfaces 16, 18, 20 and 22, of the first and second cylindrical members 12 and 14, together form two oppositely facing substantially V-shaped or conical sections, which thereby together form and define the bearing track 10.

According to this embodiment of the single track integrated bearing assembly 2, the second outer bearing section or surface 18 is removable/adjustable and thus is not formed integrally with the outer cylindrical member 12. That is, the second outer bearing section or surface 18 is formed on a leading surface or section of a adjustable annular retaining element(s) 32 which is secured to-typically inserted between-the first and the second cylindrical members 12 and 14 during final assembly of the integrated bearing assembly 2. During the assembly of the integrated bearing assembly 2, the bearing elements 28, including any associated gate or cage 8, are first generally positioned in one of the inner or outer halves or portions of the bearing track 10, formed by the bearing sections or surfaces 16, 20 and 22, and retained therein by assembling the first and the second cylindrical members 12, 14 with one another, as generally illustrated in Fig. 2A. Thereafter, the annular retaining element(s) 32 is then secured to at least one of, and possibly both of, the first and the second cylindrical members 12, 14 so as to captively enclose and/or trap the bearing elements 28 within the single bearing track 10 formed by the aligned bearing sections or surfaces 16, 18, 20 and 22 of the cylindrical members 12 and 14. During final adjustment of the integrated bearing assembly 2, the annular retaining element(s) 32 is then sufficiently tightened, relative to a remainder of the integrated bearing assembly 2, in order to load the bearing elements 28 with a suitable loading pressure.

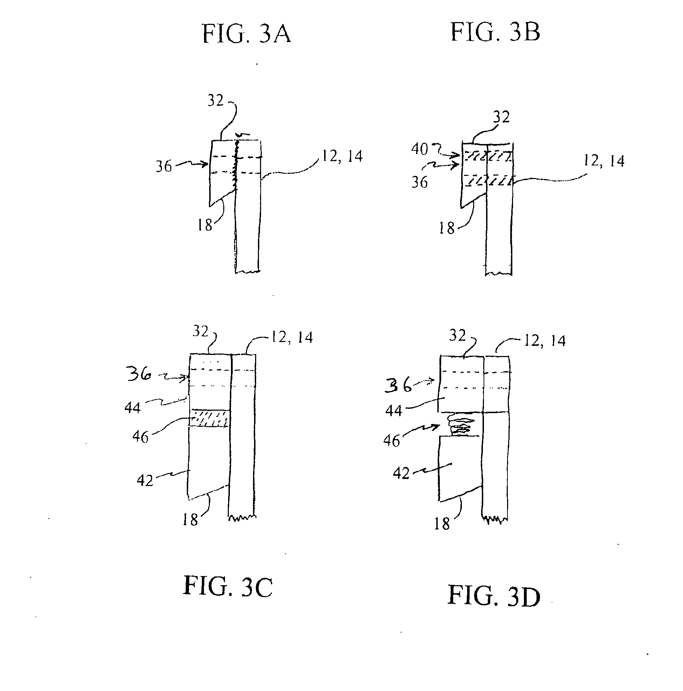

It is to be appreciated that the retaining element(s) 32 may be a single generally round or circular component or may be formed as two or more separate arcuate sections or components which are thereafter pressed, glued, screwed or otherwise affixed in place by conventional screws, bolts, studs or fasteners, generally indicated as 36 (see Figs. 3A-3D and a brief discussion concerning the same below), thereby kinematically forcing the bearing elements 28 into their only possible positions along the rotational path of the single bearing track 10.

The retaining element(s) 32 may be secured to at least one, or possibly both of, the first and/or the second cylindrical members 12, 14 by bolts, screws, studs or fasteners, generally indicated as 36, with or without a resilient bushing(s) element(s) 40 (see Fig. 3B), for example, interposed between the bolts, screws, studs or fasteners 36, and the retaining element(s) 32 (see Figs. 3A and 3B, respectively) so as to provide a resilient biasing force which urges the retaining element(s) 32 toward the bearing elements 28 and provides the desired loading of the bearings 28. In yet other embodiments, the retaining element(s) 32 may be constructed as upper and lower sections 44, 42 with the upper section(s) 44 being affixed to the first and/or the second cylindrical member 12, 14, by one or more conventional fasteners 36, while the lower section(s) 42 carries the bearing surface 18. The upper section(s) 44 and the lower section(s) 42 may be joined together by one or more resilient biasing element(s) 46, such as a strip of resilient material, a spring (e.g., a leaf spring), a resilient compressible material, a flexure element, etc. It will be recognized that these embodiments will thereby resiliently bias the lower section(s) 42 away from the upper section(s) 44 and into engagement with the bearing elements 28, as well as complete formation of the bearing track 10 while, at the same time, resiliently adapting to minor variations or tolerances in the bearing track surfaces or curves and/or in bearing elements 28.

As noted above, in order to ensure that the bearing elements 28 are constantly maintained at a desired spacing from one another along the bearing track 10, the single bearing track 10 will typically include some type of conventional keeper(s) or cage(s) 8 (only diagrammatically illustrated in Figs. 2A and 2B). As this component is conventional and well known for use with ball bearing assemblies, a further detail description concerning the same is not provided.

Referring next to Figs. 2C and 2D, a cross sectional view of a dual track integrated bearing assembly 2, generally similar to the single track integrated bearing assembly 2 of Figs. 2A and 2B, is shown. According to this embodiment, the first and the second cylindrical members 12, 14 are rotatable with respect to one another about an axis of rotation R via the dual track integrated bearing assembly 2. The dual track integrated bearing assembly 2 has a first (vertically upper) bearing track 24 which is axially spaced apart from a second (vertically lower) bearing track 26. As with the single bearing track embodiment discussed above, each of the first and the second bearing tracks 24, 26 are formed by a first portion of the first cylindrical member 12 and a mating first portion of the second cylindrical member 14.

As shown, the second cylindrical member 14 includes the radially inner portion of the first bearing track 24 which comprises a first inner bearing section or surface 20 which lies or extends substantially parallel to the axis of rotation R and faces away from the axis of rotation R. The retaining element(s) 32 carries the second inner bearing section or surface 22 which extends generally perpendicular with respect to and also generally faces away from the axis of rotation R. The retaining element(s) 32 facilitates preloading of the bearings and may be secured to either the first or the second cylindrical member 12, 14 in a conventional manner, as discussed above, typically the second cylindrical member 14 as shown. The first cylindrical member 12 includes a radially outer portion of the first bearing track 24 which comprises a circumferential first outer bearing section or surface 16, which is inclined with respect to and generally faces toward the axis of rotation R. These three bearing surfaces, namely, the first and the second inner bearing sections or surfaces 20 and 22 and the first outer bearing section or surface 16, together form and define the first bearing track 24 of the dual track integrated bearing assembly 2.

The second cylindrical member 14 also includes the radially inner portion of a second bearing track 26 which comprises first and second bearing sections or surfaces 20, 22 having a relative orientation which is fixed with respect to one another. The first inner bearing section or surface 20 extends substantially parallel to the axis of rotation R while the second inner bearing section or surface 22 extends substantially perpendicular to the axis of rotation R, i.e., generally faces away from the axis of rotation R. The first cylindrical member 12 includes a radially outer portion of the second bearing track 26 which comprises an inwardly facing circumferential first outer bearing section or surface 16, which is inclined with respect to and generally faces toward the axis of rotation R. These three surfaces, the first outer bearing section or surface 16 and the first and the second inner bearing sections or surfaces 20, 22, together form and define the second bearing track 26 of the dual track integrated bearing assembly 2.

As shown in Figs. 2C and 2D, for example, the first and second inner bearing sections or surfaces 20, 22 of the first bearing track 24 generally form a pair of adjustable adjacent corner or V-shaped bearing surfaces which have an internal angle of between about 30 and 120 degrees, more preferably an internal angle of about 90 degrees. Similarly, the first and second inner bearing sections or surfaces 20, 22 of the second bearing track 26 generally form a pair of fixed adjacent V-shaped bearing surfaces which have an internal angle of between about 30 and 120 degrees, more preferably an internal angle of about 90 degrees. It is to be appreciated that the angle formed between any pair of adjacent inner or outer bearing sections or surfaces 16, 18, 20 or 22 is typically between about 20 degrees and about 120 degrees, more preferably between about 90 degrees and about 45 degrees. In Figs. 2C and 2D, the angle formed between the first and second inner bearing sections or surfaces 20, 22 is about 90 degrees, the angle formed between the first inner bearing section or surface 20 and the first outer bearing section or surface 16 is about 50 degrees ± 10 degrees, and the angle formed between the second inner bearing section or surface 22 and the first outer bearing section or surface 16 is about 40 degrees ±10 degrees.

As illustrated in Figs. 2C and 2D, the first outer bearing section or surface 16 and the mating first and second inner bearing sections or surfaces 20, 22 of the first bearing track 24 are adjacent and generally face one another but are generally of opposite facing orientations, while the second outer bearing section or surface 16 and the mating first and second inner bearing sections or surfaces 20, 22 of the second bearing track 26 are adjacent and generally face one another but are also generally of opposite facing orientations. As a result of this arrangement, the corresponding triad of the bearing sections or surfaces 16, 20, 22 and 16, 20, 22 of the first and the second cylindrical members 12 and 14 thereby respectively form the first bearing track 24 and the second bearing track 26 which are each formed by three mating generally flat or conical sections or surfaces. The first bearing track 24 and the second bearing track 26 are arranged axially parallel to one another and are located and lie in spaced apart radial planes P, P' that extend perpendicular to the axis of rotation R.

As illustrated if Figs. 2C and 2D, each of the first and the second bearing tracks 24, 26 contains and retains two or more bearing elements 28, so that cylindrical members 12, 14, and thus the first and the second mounts 4 and 6, may rotate with respect to one another about the axis of rotation R. As noted above, the cross sections of the first bearing track 24 and the second bearing track 26 are influenced by the shapes of the inner and/or outer first and/or second bearing sections or surfaces 16, 20, 22 of the shapes and/or sizes of the first and the second cylindrical members 12, 14.

As illustrated, the first and the second bearing tracks 24, 26 may, for example, have one sloping wall, a parallel wall and a normal wall, as illustrated in Figs. 2C and 2D. Additionally, the pair of adjacent walls may be V-shaped or may have mutually perpendicular flat walls and surfaces, and so on, depending on the overall design, machining and assembly requirements of the integrated bearing assembly 2 or the type of bearing elements 28 to be employed, such as ball or cylindrical bearings.

According to this embodiment of the integrated bearing assembly 2, as illustrated in Figs. 2C and 2D, the second inner bearing section or surface 20 of the first bearing track 24 is not formed integrally with the first cylindrical member 12 but is formed on the removable/adjustable annular retaining element(s) 32, which is secured to at least one of, possibly both of, the first or the second cylindrical members 12, 14 during final assembly of the integrated bearing assembly 2-typically the second cylindrical member 14 as shown. That is, during assembly of the integrated bearing assembly 2, the bearing elements 28, including any keeper(s) or cage(s) 8, for the second bearing track 26 are first positioned between the first and the second inner bearing sections or surfaces 20, 22 supported or carried by the second cylindrical member 14. Thereafter, the first cylindrical member 12 is assembled with the second cylindrical member 14 so as to captively trapping the bearing elements 28 within the second bearing track 26 formed by the inner and the outer bearing surfaces 16, 20, 22 carried by the first and the second cylindrical members 12 and 14 when the first and the second cylindrical members 12 and 14 are brought into the relative position shown in Fig. 2C.

Next, the additional bearing elements 28, including any keeper(s) or cage(s) 8, for the first bearing track 24 are located within the space formed between the first and the second cylindrical members 12 and 14, i.e., the space between the second inner bearing section or surface 20 supported or carried by the second cylindrical member 14 and the first outer bearing section or surface 16 supported or carried by the first cylindrical member 12. Thereafter, the retaining element(s) 32 is suitably tightened to sufficiently load both sets of bearings 28, and finally the retaining element(s) 32 is then secured to at least the second cylindrical member 14, or possibly both of the first and the second cylindrical members 12 and 14, thereby trapping the bearing elements 28 within the first bearing track 24 formed by the bearing surfaces 16, 20, 22 carried by the first and the second cylindrical members 12, 14 and the retaining element(s) 32. It will be recognized that this method of construction significantly simplifies fabrication and assembly of the integrated bearing assembly 2. It should also be recognized that in an alternate embodiment, the retaining element(s) 32 may possible be secured to the first cylindrical member 12 rather than to the second cylindrical member 14.

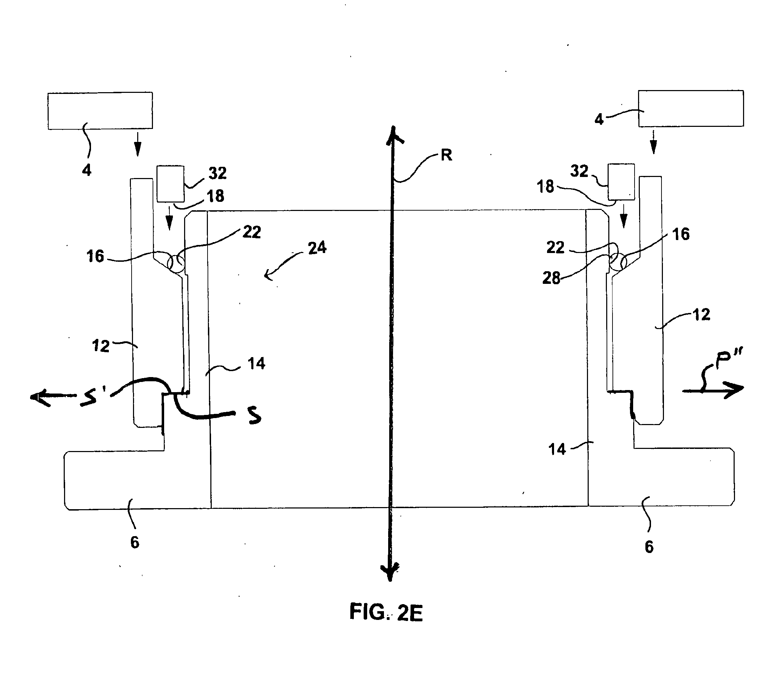

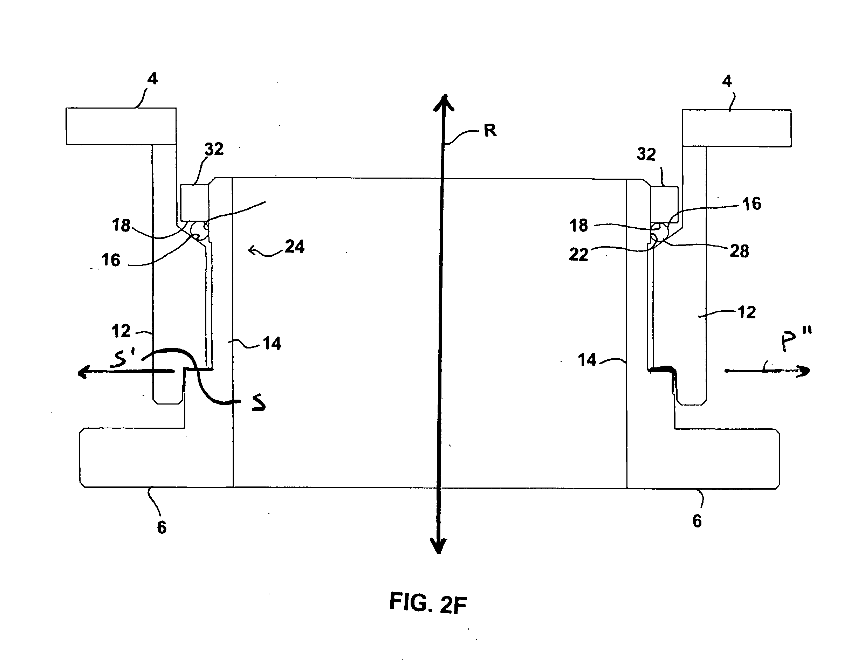

Now referring to Figs. 2E and 2F, a slight variation of the single track integrated bearing assembly 2, according to the present invention, will now be described. In order to facilitate a more complete understanding of this embodiment without repeating all of the above description, similar or identical elements are provided with the same reference numerals.

The primary difference between this embodiment and the embodiment of Figs. 2C and 2D is that the second bearing track 26 is eliminated and the first bearing track 24, like the embodiment of Figs. 2C and 2D, is formed by the first outer bearing section or surface 16 and the first and the second inner bearing sections or surfaces 20, 22. In addition, the first cylindrical member 12 is provided with a bearing shoulder S while the second cylindrical member 14 is provided with a mating bearing shoulder S' and the two bearing shoulders S, S' abut against one another, upon sufficient "loading" of the bearings 28 by the retaining element(s) 32, to prevent further axial movement of the first and the second cylindrical members 12, 14, with respect to one another axially along the rotational axis R. Generally one or both of the bearing shoulders S, S' may carry, or be coated for example, with a low frictional coating to facilitate relative rotation of the first and the second cylindrical members 12, 14 with respect to one another. The bearing shoulders S, S' define a rotational plane P" in which the first and the second cylindrical members 12, 14. In all other respects, this embodiment is the same as the embodiment described with respect to Figs. 2C and 2D and thus a further description concerning the same is not provided.

In further embodiments of the retaining element(s) 32, and referring first to the embodiment of the retaining element(s) 32 as illustrated in Fig. 3A, the retaining element(s) 32 may be, for example, snapped, pressed, glued, or otherwise affixed in place by screws, bolts, studs or fasteners, generally indicated as 36, thereby preloading and kinematically forcing the bearing elements 28 into their only possible position along the rotational path in the associated single, first or second bearing tracks 10, 24, 26.

In yet another embodiment illustrated in Fig. 3B, the retaining element(s) 32 may be mounted, for example, by bolts, screws or studs or fasteners 36, surrounded by a resilient bushing(s) or some other similar element(s), indicated generally as a resilient bushing(s) 40, interposed between the fastener(s) 36 and the retaining element(s) 32 to assist with providing a resilient biasing or preloading force which sufficiently urges the retaining element(s) 32 toward engagement with the bearings 28.

In two alternate embodiments, illustrated in Figs. 3C and 3D, respectively, the retaining element(s) 32 may be constructed as separate upper and lower sections 44, 42 with the upper section(s) 44 being affixed to the first cylindrical member 12 and/or the second member 14, by a conventional fastener 36, and the lower section(s) 42 carrying or supporting the bearing surface 18 or possibly bearing surface 20. As illustrated in both Figs. 3C and 3D, the upper section(s) 44 and the lower section(s) 42 are joined or connected together by a conventional resilient biasing element(s) 46, such as a (circular) strip of resilient material (see Fig. 3C), a (circular) flexure element or a (circular) spring (e.g., a leaf spring or a compression spring as in Fig. 3D), etc., or some other compressible material which inherently has a tendency to re-expand and thus exert the desired preloading force on the bearings elements 28. It will be recognized that both of these embodiments thereby resiliently bias the lower section(s) 42, away from the upper section(s) 44 and toward the bearing elements 28 which are retained within the bearing track 10, 24, 26 and thereby complete formation of the respective bearing tracks 10, 24, 26. These arrangements result in designs that resiliently adapt to variations or tolerances in the bearing track surfaces and/or curvatures in the bearing elements 28.

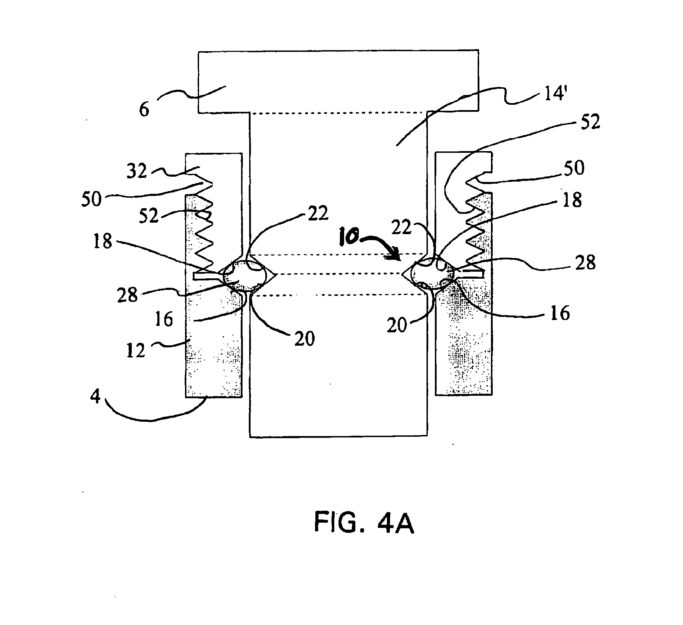

With reference now to Fig. 4A, a single track integrated bearing assembly 2 for a rotatable shaft, knob, or sleeve type second cylindrical member 14' will now be described. According to this embodiment, a first half or portion of a single track integrated bearing assembly 2 is formed by a first pair of fixed adjacent V-shaped annular first and second radially inner bearing surfaces 20, 22 formed outwardly facing exterior surface of the shaft, knob or sleeve type second cylindrical member 14'. The mating second half or portion of the single bearing track 10 is formed by mating the first and the second radially outer bearing sections or surfaces 16, 18, respectively formed in the inwardly facing surface of the first cylindrical member 12 and the adjustable retaining element(s) 32. Each of the first and the second cylindrical members 12, 14' can be connected with a desired table(s), component(s), surface(s), mount(s), etc., via the respective mounts 4, 6 as described above. The first and the second outer bearing sections or surfaces 16, 18 and the first and the second inner bearing sections or surfaces 20, 22 align with and mate with one another so as to define the single bearing track 10 which captively retains a plurality of bearing elements 28 therein and facilitates rotation of the first and the second cylindrical members 12, 14', with respect to one another, as well as the first and/or the second desired table(s), component(s), surface(s), etc.

The single bearing track 10 contains two or more bearing elements 28, typically a plurality of ball bearings, which engage with the mating bearing sections or surfaces 16, 18, 20 and 22 to facilitate relative rotation of the first and the second cylindrical members 12, 14' relative to one another. As with the previous embodiments, a cross section of the bearing track 10 is determined and/or influenced by the shapes of the bearing sections or surfaces 16, 18, 20 and 22 formed in the first and the second cylindrical members 12, 14'.

Similar to the above discussed embodiments, the second outer bearing section or surface 18 is formed on the retaining element(s) 32 which is removable/adjustable and thus is not formed integrally with the first cylindrical member 12. As shown in Fig. 4A, the retaining element(s) 32 is provided with an exterior thread 50 while an inwardly facing surface of the first cylindrical member 12 is provided with a mating interior thread 52 so that rotation of the retaining element(s) 32 in a first rotational direction, relative to the first cylindrical member 12, threads the second outer bearing section or surface 18 toward the first outer bearing section or surface 16 and thus forces the bearings 28 both toward the first outer bearing section or surface 16 and also radially inwardly toward the first and the second inner bearing sections or surfaces 20, 22 thereby preloading the bearings 28. Such threaded movement in the first rotational direction facilitates adjustment of the desired preloading pressure to be applied to the individual ball bearings 28 which are retained within the single bearing track 10. In addition, rotation of the retaining element(s) 32 in the second opposite rotational direction, relative to the first cylindrical member 12, threads the second outer bearing section or surface 18 away from the first outer bearing section or surface 16, e.g., to reduce the loading pressure or facilitate replacement of the bearings 28, for example.

During the assembly of the integrated bearing assembly 2, the second cylindrical member 14' is brought into engagement with the first cylindrical member 12, as also generally illustrated in Fig. 4A. Next, the bearing elements 28, including any associated keeper(s) or cage(s) 8, are generally positioned in the first half or portion of the bearing track 10 formed by the first and second inner bearing sections or surfaces 20, 22, supported or carried by the exterior surface of the second cylindrical member 14', and engage with the first outer bearing section or surface 16, as generally illustrated in Fig. 4A. Thereafter, the annular retaining element(s) 32 then threadedly engages with the first cylindrical member 12 so as to thread and move the second outer bearing section or surface 18 toward the first outer bearing section or surface 16 and adjust the preloading pressure to be applied to the ball bearings 28 captively enclosed and/or trapped within the bearing track 10.

After a sufficient "loading pressure" is applied to the ball bearings 28, the retaining element(s) 32 may be pressed, glued, screwed or otherwise affixed in place by, for example, a screw(s), a bolt(s), a stud(s), or some other fastener(s) 36, so as to retain the adjusted position of the retaining element(s) 32 and prevent an undesired relative rotation between the retaining element(s) 32 and the first cylindrical member 12. Such arrangement thereby kinematically forces and retains the bearing elements 28 into their only possible positions along the rotational path for the bearing track 10.

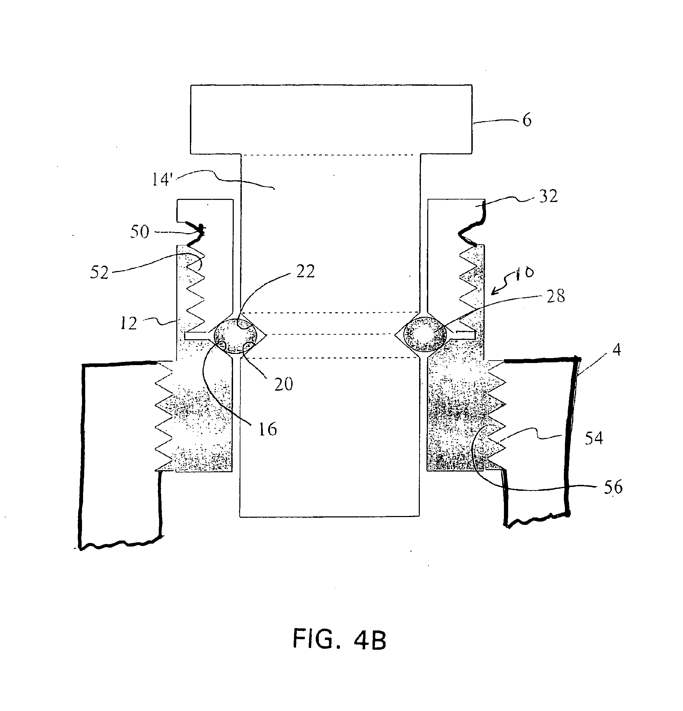

Now referring to Fig. 4B, a slight variation of the single track integrated bearing assembly 2 shown in Fin 4A, will now be described in detail. In order to facilitate a complete understanding of this embodiment without repeating all of the above description, similar or identical elements are provided with the same reference numerals.

The primary difference between the embodiment of Fig. 4B and the embodiment shown in Fig. 4A is that the first cylindrical member 12 is provided with a mount 4 which comprises an external thread 54 that permits a threaded connection of the first cylindrical member 12 with an internal thread 56 of a desired table, component, surface, etc., in order to interconnect those two components with one another in a relatively easy fashion. In all other respects, this embodiment is the same as the embodiment described with respect to Fig. 4A and thus a further description concerning the same is not provided.

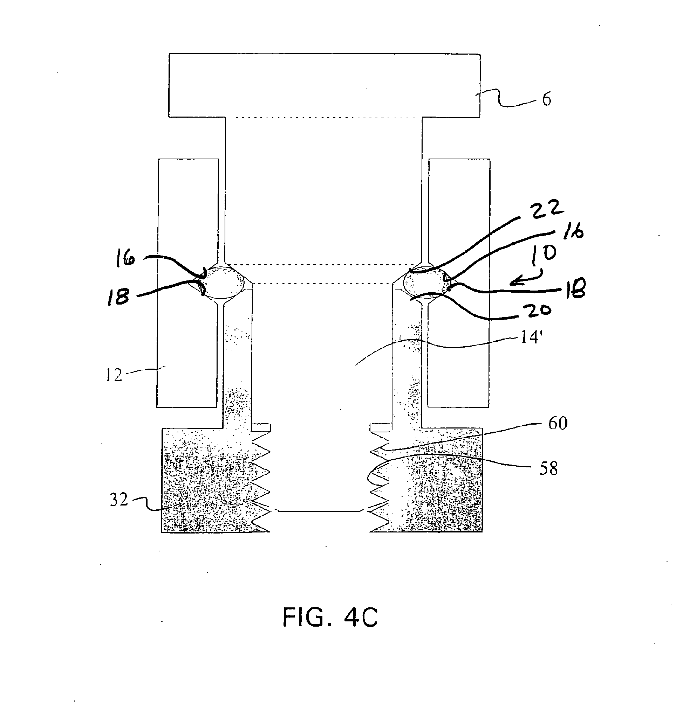

Now referring to Fig. 4C, a further variation of the single track integrated bearing assembly 2, shown in Fig. 4A, will now be described. In order to facilitate a complete understanding of this embodiment without repeating all of the above description, similar or identical elements are provided with the same reference numerals.

The primary difference between the embodiment shown in Fig. 4C and the embodiment of Fig. 4A is that the retaining element(s) 32 threadedly engages with the second cylindrical member 14' rather than with the first cylindrical member 12. According to this embodiment, the first inner bearing section or surface 20 is formed on the retaining element(s) 32, which is adjustable while the mating second inner bearing section or surface 22 is formed in the exterior surface of the second cylindrical member 14'. The first and second outer bearing sections or surfaces 16, 18 are fixed with respect to one another and formed in the radially inwardly facing surface of the first cylindrical member 12. The retaining element(s) 32 is provided with an internal thread 58 while an exterior surface of the second cylindrical member 14' is provided with a mating exterior thread 60. Due to this arrangement, rotation of the retaining element(s) 32 in a first rotational direction, relative to the second cylindrical member 14', threads and moves the first inner bearing section or surface 20 toward the second inner bearing section or surface 22. Such threaded movement in the first rotational direction facilitates adjustment of the loading pressure to be applied to the ball bearings 28 which are retained within the single bearing track 10. Alternatively, rotation of the retaining element(s) 32 in the second opposite direction, relative to the second cylindrical member 14', threads the first inner bearing section or surface 20 away from the second inner bearing section or surface 22 and reduces the bearing loading pressure or facilitates replacement of the bearings 28.

During the assembly of the integrated bearing assembly 2, the second cylindrical member 14' is generally partially passed, threaded end first, into the opening of the first cylindrical member 12 and then the bearing elements 28, along with and associated keeper(s) or cage(s) 8, are generally positioned in the first half or portion of the bearing track 10, formed by the first and the second outer bearing sections or surfaces 16, 18 in the inwardly facing surface of the first cylindrical member 12, and in engagement with the second inner bearing section or surface 22. Thereafter, the second cylindrical member 14' is fully passed into the opening of the first cylindrical member 12, as generally illustrated in Fig. 4C. Next, the annular retaining element(s) 32 threadedly engages with the second cylindrical member 14' so as to thread the first inner bearing section or surface 20 toward the second inner bearing section or surface 22 and adjust the loading pressure being applied to the individual ball bearings 28 captively enclosed and/or trapped within the bearing track 10.

After a sufficient loading pressure is applied to the ball bearings 28, the retaining element(s) 32 may be pressed, glued, screwed or otherwise affixed in place by a screw(s), a bolt(s), a stud(s), or some other fastener(s) 36, so as to retain the adjusted position of the retaining element(s) 32 and prevent an undesired relative rotation between the retaining element(s) 32 and the second cylindrical member 14'. Such arrangement thereby kinematically forces and retains the bearing elements 28 into their only possible positions along the rotational path for the bearing track 10.

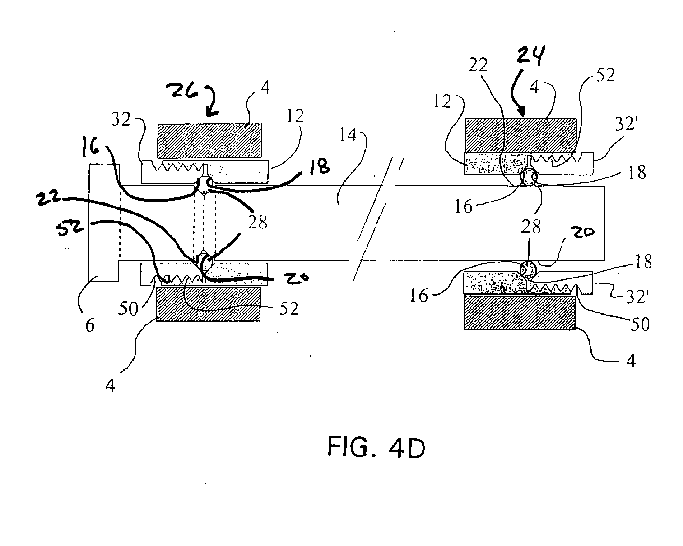

Now referring to Fig. 4D, another variation of the integrated bearing assembly 2 for a rotatable shaft, knob, or sleeve type second cylindrical member 14', shown in Fig. 4A, will now be described. In order to facilitate a complete understanding of this embodiment without repeating all of the above description, similar or identical elements are provided with the same reference numerals. It is to be appreciated that similar functioning systems, using conventional ball bearings, typically require dual pressed in bearings to achieve axial constraint, plus retaining members, such as a pair of snap rings, for longitudinal constraint.

The primary difference between the embodiment of Fig. 4D and the embodiment of Fig. 4A is that, in addition to the first bearing track 24, which is substantially identical to the previously described single bearing track 10 of Fig. 4A, a spaced apart second bearing track 26 is also provided. According to this embodiment, the first bearing track 24 does not, per se, have any specific annular inner bearing section or surface formed within the exterior surface of the shaft, knob, or sleeve type second cylindrical member 14'. That is, the inner bearing section or surface 20, which comprises the first half or portion of the first bearing track 24, is merely a cylindrical section of the exterior surface of the second cylindrical member 14'. The mating second half or portion of the first bearing track 24 is formed by mating first and second outer bearing sections or surfaces 16, 18, formed in a section of the first cylindrical member 12 and the retaining element(s) 32, and the first cylindrical member 12 can be connected with a desired table, component, surface, etc., generally indicated as mount 4. The first and second outer bearing sections or surfaces 16, 18 are inclined with respect to one another and are generally V-shaped surfaces. The first inner bearing section or surface 20 generally aligns with and mates with the first and second outer bearing sections or surfaces 16, 18 so as to define the first bearing track 24 which captively retains a plurality of bearing elements 28 therebetween and facilitate rotation of the first and the second cylindrical members 12, 14', and thus the mounts 4, 6 along with any supported table(s), component(s), surface(s), etc.

A first set of ball bearings 28 engage with the mating the first and the second outer bearing sections or surfaces 16, 18 and the first inner bearing section or surface 20 of the first bearing track 24 and a second set of ball bearings 28 engage with the mating the first and the second outer bearing sections or surfaces 16, 18 and the first and the second inner bearing sections or surfaces 20, 22 of the second bearing track 26 to facilitate relative rotation of the first and the second cylindrical members 12, 14' with respect to one another. The second bearing track 26 defines four points of contact and thus prevents relative axial movement of the first and the second cylindrical members 12, 14 with respect to one another, e.g., only permits one degree of freedom, namely, relative rotations.

Similar to the bearing track 10 of Fig. 4A, the second outer bearing section or surface 18 is formed on the retaining element(s) 32' which is adjustable and thus is not formed integrally with the cylindrical member 12. As shown in Fig. 4D, each of the retaining elements 32, 32' is provided with an exterior thread 50, while an inwardly facing surface of each of the first cylindrical members 12 is provided with a mating interior thread 52. These mating threads 50, 52 allow rotation of the retaining elements 32, 32' in a first rotational direction, relative to the respective first cylindrical member 12, so as to thread and move the second outer bearing section or surface 18 toward the respective first outer bearing section or surface 16. Such threaded movement in the first rotational direction facilitates separate adjustment of the loading pressure to be applied to the ball bearings 28 retained within each of the first and the second bearing tracks 24, 26. In addition, rotation of the retaining elements 32, 32' in a second opposite rotational direction, relative to the respective first cylindrical member 12, threads or moves the second outer bearing section or surface 18 away from the first outer bearing section or surface 16 and reduces the bearing loading pressure or facilitates replacement of the bearings 28.

During the assembly of the integrated bearing assembly 2, the first cylindrical member 12 is brought into engagement with the second cylindrical member 14', as generally illustrated in Fig. 4D, and the bearing elements 28, including any associated keeper(s) or cage(s) 8, are generally positioned in the first half or portion of the second bearing track 26, formed by the first and the second inner bearing sections or surfaces 20, 22 carried by the exterior surface of the second cylindrical member 14'. Thereafter, the first cylindrical member 12 is brought into full engagement with the second cylindrical member 14', as illustrated in Fig. 4D. Next, a first one of the annular retaining elements 32 threadedly engages with the first cylindrical member 12 so as to thread the second outer bearing section or surface 18 toward the first outer bearing section or surface 16 and adjust the pressure being applied to the individual ball bearings 28 captively enclosed and/or trapped within the second bearing track 26. Then, the bearing elements 28, including any associated keeper(s) or cage(s) 8, are generally positioned in the first half or portion of the first bearing track 24, formed by the first inner bearing section or surface 20 formed on the exterior surface of the second cylindrical member 14', as generally illustrated in Fig. 4D, and the second half or portion of the first bearing track 24, formed by the first outer bearing section or surface 16 formed in the interior surface of the first cylindrical member 12. Next, the second one of the annular retaining elements 32' threadedly engages with the first cylindrical member 12 so as to thread the second outer bearing section or surface 18 toward the first outer bearing section or surface 16 and adjust the pressure being applied to the individual ball bearings 28 captively enclosed and/or trapped within the first bearing track 24.

After a sufficient loading pressure is applied to the ball bearings 28, as with the previous embodiment, each of the retaining elements 32, 32' may be pressed, glued, screwed or otherwise affixed in place by a screw(s), a bolt(s), a stud(s) or some other fastener(s) 36, so as to retain the adjusted position of the respective retaining elements 32, 32' and prevent an undesired relative rotation between the retaining elements 32, 32' and the respective first cylindrical member 12. Such arrangement thereby kinematically forces and retains each set of the bearing elements 28 in their only possible positions along the rotational path of the respective first and second bearing tracks 24, 26.

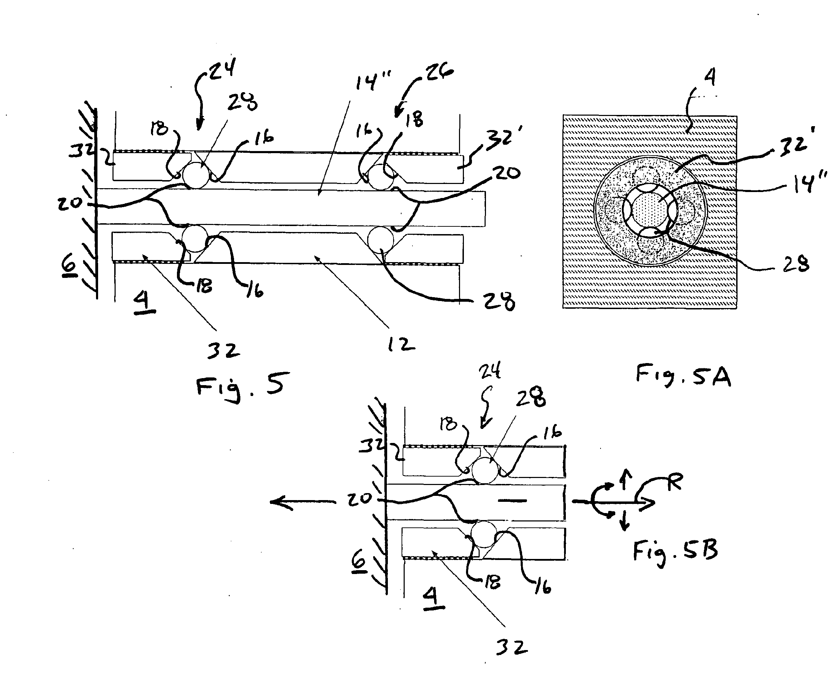

With reference to Figs. 5 and 5A, a dual track integrated bearing assembly 2 for a linear bearing type second cylindrical member 14" will now be described. It is to be appreciated that this embodiment also allows, in addition to rotation of the second cylindrical member 14", freedom to thrust or move the second cylindrical member 14" axially along the axis of rotational R. The dual track integrated bearing assembly 2 has a first bearing track 24 which is axially spaced apart from a second bearing track 26, and also includes a first cylindrical member 12 and a second cylindrical member 14". Each of the first and the second bearing tracks 24, 26 are formed by a first portion of the first cylindrical member 12 and a mating second portion of the second cylindrical member 14". The first cylindrical member 12 may be formed integral with or attached to the first mount 4 while the second cylindrical member 14" is connected to or integral with the second mount 6, for example.

Similar to the first bearing track 24 in the embodiment shown in Fig. 4D, both of the first and the second bearing tracks 24, 26 of this embodiment do not, per se, have any specific annular inner bearing section or surface formed within the exterior surface of the shaft, knob, or sleeve type second cylindrical member 14". The inner bearing section or surface 20, which comprises the first half or portion of the first bearing track 24, is merely a cylindrical section of the exterior surface of the second cylindrical member 14". The mating second half or portion of the first bearing track 24 is formed by a mating first bearing section or surface 16 formed in a section of the first cylindrical member 12, which can be connected with a desired table, component, surface, mount, etc. 4, for example, and a second bearing section or surface 18 formed on or in a leading end or lateral surface of a first retaining element 32. As shown, the first and second outer bearing sections or surfaces 16, 18 are both inclined with respect to one another and generally form a relatively adjustable pair of V-shaped bearings surfaces. The first inner bearing section or surface 20 generally aligns with and mates with the first and second outer bearing sections or surfaces 16, 18 so as to define the first bearing track 24 which captively retains a plurality of bearing elements 28 therebetween.

The first inner bearing section or surface 20, which comprises the first half or portion of the second bearing track 26, is also merely a cylindrical section of the exterior surface of the second cylindrical member 14". The mating second half or portion of the second bearing track 26 is formed by a mating first bearing section or surface 16 formed in a section of the first cylindrical member 12, which can be connected with a second desired table, component, surface, mount, etc. 6, for example, and a second bearing section or surface 18 formed on or in a leading end or lateral surface of a second retaining element 32'. As shown, the first and second outer bearing sections or surfaces 16, 18 are both inclined with respect to one another and generally form a relatively adjustable pair of adjacent V-shaped bearings surfaces. The first inner bearing section or surface 20 generally aligns with and mates with the first and second outer bearing sections or surfaces 16, 18 so as to define the second bearing track 26 which captively retains a plurality of bearing elements 28 therebetween. As noted above, the arrangement of Figs. 5 and 5A provides two degrees of freedom for the integrated bearing assembly 2, namely, the first and the second cylindrical members 12, 14" can rotate relative to one another and the first and the second cylindrical members 12, 14" can also move axially relative to one another along the axis of rotation R.

It is to be appreciated that if the second bearing track 26 where eliminated from Fig. 5 and the length of the first and the second cylindrical members 12, 14" were both shortened, as shown in Fig. 5B, this embodiment would only include the first bearing track 24. As a result of such modification, the integrated bearing assembly 2 would have three degrees of freedom, namely, firstly the first and the second cylindrical members 12, 14" could rotate relative to one another, secondly the first and the second cylindrical members 12, 14" could move or slide axially relative to one another along the axis of rotation R, and thirdly the first and the second cylindrical members 12, 14" could also pivot or move toward or away from one another and relative to the axis of rotation R in the direction of the opposed arrows shown in Fig. 5B.

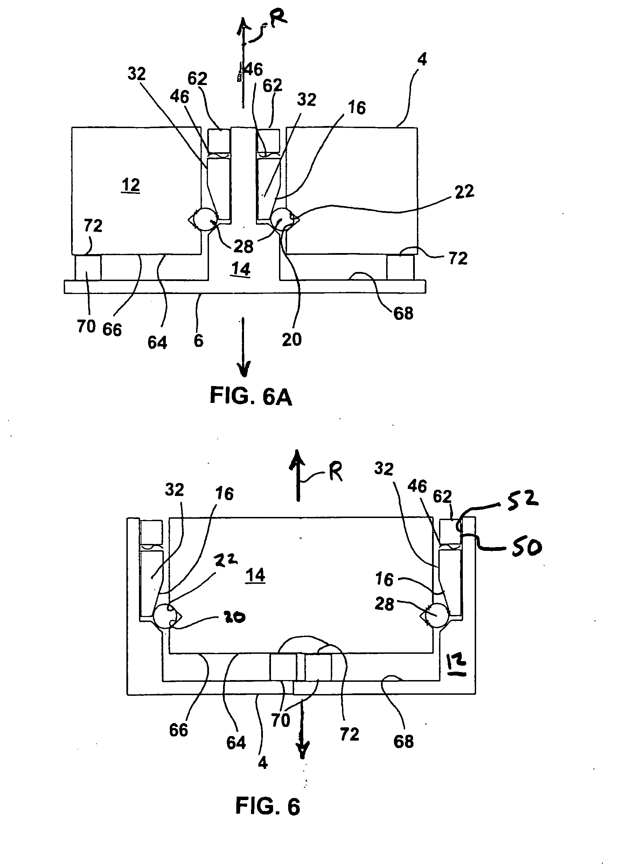

With reference to Fig. 6, a still further embodiment of a single track integrated bearing assembly 2 will now be described. As diagrammatically shown, the first cylindrical member 12 is either integral with or secured to a first table, component, device, etc., by the mount 4 in a conventional fashion, while the second cylindrical member 14 is either integral with or secured to a second table, component, device, etc., by the mount 6 in a conventional fashion.

According to this embodiment, a radially outer half or portion of the single bearing track 24 is formed by a first annular outer bearing section or surface 16 formed on or in a leading lateral surface of the (cylindrical) retaining element(s) 32. The first annular outer bearing section or surface 16 generally forms an angle of about 25 degrees or so with respect to the axis of rotation R and such angle generally assists with forcing the ball bearings 28 into the V-shaped groove, as discussed below. The retaining element(s) 32 is preferably supported by the outer first cylindrical member 12. That is, the retaining element 32 is received by the first cylindrical member 12 and biased into engagement with ball bearings 28 by a cylindrical threaded ring 62 with a spring member 46 being located between the threaded ring 62 and the retaining element 32 for biasing the retaining element 32 away from the threaded ring 62. The second radially inner half or portion of the single bearing track 24 is formed by mating fixed first and second radially inner bearing sections or surfaces 20, 22 formed in the exterior surface of the inner second cylindrical member 14. The first outer bearing section or surface 16 and the first and the second inner bearing sections or surfaces 20, 22 are aligned with and mate with one another so as to define the single bearing track 10 therebetween which captively contacts the bearings 28 at three points of contact and thus retain the plurality of bearing elements 28 within the first bearing track 24 and facilitates relative rotation of the first and the second cylindrical members 12, 14 with respect to one another.

The bottom surface 64 of the inner second cylindrical member 14 is optically ground (typically to within about ½ micron) so as to form a completely flat planar bearing surface 66 upon which the inner second cylindrical member 14 can rotate. A bottom interior surface 68 of the outer first cylindrical member 12 supports a plurality, typically three, spaced apart low friction glide members 70 which each have a correspond glide surface 72 that is located to engage with the optically ground bottom surface 64 of the second cylindrical member 14 and facilitate relative rotation between the first and second cylindrical members 12, 14 with respect to one another.

As shown in Fig. 6, the circumferential first and second inner bearing sections or surfaces 20, 22 generally face away from the central axis of rotation R while the first annular outer bearing section or surface 16 generally faces toward the central axis of rotation R. As with the previous embodiments, the single bearing track 24 contains and retains two or more bearing elements 28, typically a plurality of bearings, which engage with the mating bearing sections or surfaces 16, 20 and/or 22 and facilitate rotation of the first and the second cylindrical members 12, 14 with respect to one another and thus rotation of the first and the second mounts 4, 6 with respect to one another.

During the assembly of the integrated bearing assembly 2, the bearing elements 28, including any associated keeper(s) or cage(s), are generally positioned in the first half or portion of the first bearing track 24, formed by the first and second inner bearing sections or surfaces 20, 22 carried by the exterior surface of the second cylindrical member 14, as generally illustrated in Fig. 6. Thereafter, the first cylindrical member 12 is brought into engagement with the second cylindrical member 14 and then the annular retaining element 32 engages with the first cylindrical member 12 and forces the first outer bearing section or surface 16 toward the bottom surface 68 of the first cylindrical member 12 and adjusts the pressure being applied to the ball bearings 28 captively enclosed and/or trapped within the first bearing track 24. Due to the shallow angle of the first annular outer bearing section or surface 16, e.g., about 25 degrees or so with respect to the axis of rotation R, the ball bearings are generally forced radially inward into engagement with the fixed first and second radially inner bearing sections or surfaces 20, 22 of the second cylindrical member 14. Such adjustment movement of the annular retaining element 32 also, in turn, forces the optically ground bottom surface 64 of the second cylindrical member 14 against the glide surfaces 72 of the plurality of spaced apart low friction glide members 70 and thus provides a fourth point of contact for the assembly. The engagement between the optically ground bottom surface 64 of the second cylindrical member 14 and the low friction glide members 70 minimizes the amount of wobble which can occur as the second cylindrical member 14 rotates relative to the first cylindrical member 12 so that a very precise relative rotation between the first and the second cylindrical members 12, 14 is achieved.

After a sufficient loading pressure is applied to the ball bearings 28, as with the previous embodiment, the retaining ring 62 may be pressed, glued, screwed or otherwise affixed in place by a screw(s), a bolt(s), a stud(s), or some other fastener(s), so as to retain the adjusted position of the retaining ring 62 and thus the retaining element 32 and prevent any undesired relative rotation between the retaining element 32 and the first cylindrical member 12. Such arrangement thereby kinematically forces and retains the bearing elements 28 into their only possible positions along the rotational path of the first bearing track 24. According to this embodiment, the first cylindrical member 12 is provided with a centrally located cavity C and the first cylindrical member 12 generally surrounds the second cylindrical member 14. That is, the second cylindrical member 14 is generally locate within the cavity C of the first cylindrical member 12.

It is to be appreciated that the arrangement of the first and the second cylindrical members 12, 14 can be generally reversed, as shown in Fig. 6A, with departing from the present invention. That is, the radially inner half or portion of the single bearing track 24 is formed by the first annular inner bearing section or surface 16 formed on or in a leading lateral surface of the retaining element(s) 32. The first annular inner bearing section or surface 16 generally forms an angle of about 25 degrees or so, with respect to the axis of rotation R, and such angle generally assists with forcing the ball bearings 28 radially outward toward the second radially outer half or portion of the single bearing track 24 formed by mating fixed first and second radially outer bearing sections or surfaces 20, 22 formed in the outer second cylindrical member 14. The first inner bearing section or surface 16 and the first and the second outer bearing sections or surfaces 20, 22 are aligned with and mate with one another so as to define the single bearing track 10 therebetween which captively contacts the bearings 28 at three points of contact and thus retains the plurality of bearing elements 28 within the first bearing track 24 and facilitates relative rotation of the first and the second cylindrical members 12, 14 with respect to one another.

As with the previous embodiment, the bottom surface 64 of the outer first second cylindrical member 12 is optically ground 66 while the bottom interior surface 68 of the inner second cylindrical member 14 supports a plurality, typically three, spaced apart low friction glide members 70 which each have a correspond glide surface 72 that is located to engage with the optically ground bottom surface 64 of the second cylindrical member 14 and facilitate relative rotation between the first and second cylindrical members 12, 14 with respect to one another. According to this embodiment, the first cylindrical member 12 is provided with a centrally located cavity C and the first cylindrical member 12 generally surrounds a central portion of the second cylindrical member 14. That is, the central portion of the second cylindrical member 14 extends through is accommodated within the cavity C of the first cylindrical member 12.

Typically, the single bearing track 10 design (see Figs. 2A, 2B, 4A, 4B and 4C) is use in connection with rotational tables, especially for tables with a low profile, and will typically be utilized when a height H of the cylindrical integrated bearing assembly 2 is less than a diameter or a maximum width dimension D of the cylindrical integrated bearing assembly 2 (see Fig. 2B). The dual bearing track 24, 26 design (see Figs. 2C, 2D, 4D, and 5) is typically utilized when the height H of the cylindrical integrated bearing assembly 2 is greater than the diameter or maximum width dimension D of the cylindrical integrated bearing assembly 2.

It is to be appreciated that the retaining element(s) 32, 32' are generally annular in shape and may be secured in place by a snap fit connection, or some other conventional connection which releasably locks the retaining element(s) 32, 32' in position, while still also facilitates removal of the retaining element(s) 32, 32' when servicing, cleaning, repairing and/or maintenance of the cylindrical integrated bearing assembly 2 is required for some reason.

For each of the above described embodiments, it is to be appreciated that the arrangement of the first cylindrical member 12 surrounding the second cylindrical member 14 may be reversed so that the second cylindrical member 14 surrounds the first cylindrical member 12, without departing from the spirit and scope of the invention.

During manufacture and assembly of the cylindrical integrated bearing assembly 2, the desired pressure for loading the retaining element(s) 32, 32', which secures the plurality of bearing elements 28 in position within either or both of the bearing tracks 10, 24, 26, is between one half (½) pound and about twenty (20) pounds or so, and more preferably the preloading pressure of about three (3) pounds plus or minus one (1) pound of pressure.

According to the inventive aspect of the present invention, a bearing section or surface 18, 20 or 22 is formed in or on a leading end or leading lateral surface of the adjustable annular retaining element(s) 32, 32'. Due to such arrangement, the adjustable annular retaining element(s) 32, 32' is adjusted in a direction parallel to the axis of rotation R so that the bearing section or surface of the adjustable annular retaining element(s) forces the bearings 28, one of generally radially inwardly or generally radially outward, and thus "loads" the bearings with a desired loading pressure which retains the bearings in constant and continuous contact with both the inner and the outer portions of the respective bearing track.

Since certain changes may be made in the above described integrated bearing assembly without departing from the spirit and scope of the invention herein involved, it is intended that all of the subject matter of the above description or shown in the accompanying drawings shall be interpreted merely as examples illustrating the inventive concept herein and shall not be construed as limiting the invention.

## Claims

1. An integrated bearing assembly comprising:
first and second cylindrical members radially spaced apart from one another about an axis of rotation;
the first cylindrical member supporting a first portion of a first bearing track and the second cylindrical member supporting a second mating portion of the first bearing track;
the first and the second portions of the first bearing track being located adjacent to and facing one another to form the first bearing track, and a plurality of bearing elements being retained within the first bearing track to facilitate relative rotation of the first and the second cylindrical members with respect to one another;
at least one of the first and second portions of the first bearing track comprising a pair of adjacent V-shaped bearing surfaces; and
one of the first and the second cylindrical members supporting at least one retaining element having a bearing surface which forms at least a portion of one of the first and second portions of the first bearing track, and the at least one retaining element being adjustable, in a direction parallel to the axis of rotation, for adjusting a pressure to be applied to the plurality of bearings captively retained within the first bearing track.

2. The integrated bearing assembly according to claim 1, **characterized in that** the first portion of the first bearing track comprises a single bearing surface which is inclined relative to the axis of rotation and the second portion of the first bearing track comprises the bearing surface of the at least one retaining element which, with an adjacent bearing surface, forms the second portion of the first bearing track that comprises the pair of adjacent V-shaped bearing surfaces; and
the first cylindrical member is provided with a first shoulder and the second cylindrical member is provided with a mating second shoulder, and the first and the second shoulders abut against one another to prevent further axial movement of the first and the second cylindrical members with respect to one another along the axis of rotation.

3. The integrated bearing assembly according to claim 1, **characterized in that** the first portion of the first bearing track comprises the pair of adjacent V-shaped bearing surfaces which have a fixed orientation with respect to one another, and the second portion of the first bearing track comprises the bearing surface of the at least one retaining element which, with an adjacent bearing surface, forms another pair of V-shaped bearing surfaces located adjacent to and facing one another, and the another pair of V-shaped bearing surfaces have an adjustable orientation with respect to another.

4. The integrated bearing assembly according to claim 1, **characterized in that** the first portion of the first bearing track comprises a single bearing surface which is inclined relative to the axis of rotation and the second portion of the first bearing track comprises the bearing surface of the at least one retaining element which, with an adjacent bearing surface, forms the second portion of the first bearing track which is the pair of adjacent V-shaped bearing surfaces; and
the first cylindrical member further supports a first portion of a second bearing track and the second cylindrical member further supports a second mating portion of the second bearing track, the first and the second portions of the second bearing track are located adjacent to and face one another so as to form the second bearing track, a plurality of bearing elements are retained within the second bearing track to facilitate relative rotation of the first and the second cylindrical members with respect to one another, and the first portion of the second bearing track comprises a single bearing surface which is inclined relative to the axis of rotation and the second portion of the second bearing track comprises another pair of adjacent V-shaped bearing surfaces which have a fixed orientation with respect to one another.

5. The integrated bearing assembly according to claim 1, **characterized in that** the first portion of the first bearing track comprises a single bearing surface which extends parallel to and is spaced from the axis of rotation and the second portion of the first bearing track comprises the bearing surface of the at least one retaining element which, with an adjacent bearing surface, forms the pair of adjacent V-shaped bearing surfaces and the pair of V-shaped bearing surfaces have an adjustable orientation with respect to one another.

6. The integrated bearing assembly according to claim 1, **characterized in that** the bearing surface of the at least one retaining element forms the first portion of the first bearing track, and the pair of adjacent V-shaped bearing surfaces form the second portion of the first bearing track; and
one of the first and the second cylindrical members is provided with a bottom surface and the other of the first and the second cylindrical members is provided with a plurality of guide surfaces, and the bottom surface and the guide surfaces abut against one another to prevent further axial movement of the first and the second cylindrical members with respect to one another along the axis of rotation.

7. The integrated bearing assembly according to claim 6, **characterized in that** the first cylindrical member surrounds and supports the second cylindrical member within a cavity formed within the first cylindrical member.

8. The integrated bearing assembly according to claim 6, **characterized in that** the first cylindrical member has a centrally located cavity and a central portion of the second cylindrical member is located within the cavity of the first cylindrical member and is surrounded by the first cylindrical member.

9. The integrated bearing assembly according to claim 1, **characterized in that** the first portion of the first bearing track comprises a single bearing surface which extends parallel to and is spaced from the axis of rotation and the second portion of the first bearing track comprises the bearing surface of the at least one retaining element which, with an adjacent bearing surface, forms the pair of adjacent V-shaped bearing surfaces, the pair of adjacent V-shaped bearing surfaces have an adjustable orientation with respect to one another; and
the first cylindrical member further supports a first portion of a second bearing track and the second cylindrical member further supports a second mating portion of the second bearing track, the first and the second portions of the second bearing track are located adjacent to and face one another so as to form the second bearing track, a plurality of bearing elements are retained within the second bearing track to facilitate relative rotation of the first and the second cylindrical members with respect to one another, the first portion of the second bearing track comprises a second pair of adjacent V-shaped bearing surfaces which have a fixed orientation with respect to one another, and the second portion of the first bearing track comprises the bearing surface of a second adjustable retaining element which, with an adjacent bearing surface, forms a third pair of V-shaped bearing surfaces located adjacent to and facing one another, and the third pair of V-shaped bearing surfaces have an adjustable orientation with respect to another.

10. The integrated bearing assembly according to claim 1, **characterized by** one or more of the following:
the first cylindrical member is connected to a first component and the second cylindrical member is connected to a second component;
the at least one retaining element is affixed to one of the first and the second cylindrical members by at least one resilient biasing element which resiliently biases the retaining element toward engagement with the bearing elements; and/or
one of a keeper and a cage maintains a spacing of the plurality of bearing elements from one another within the first bearing track.

11. The integrated bearing assembly according to claim 1, **characterized by** one or more of the following:
the at least one retaining element has threads and one of the first and the second cylindrical members has matingly threads to facilitate adjustment of the pressure to be applied to the plurality of bearings captively retained within the first bearing track;
at least one of the first cylindrical member and the second cylindrical member has mounts to facilitate attachment of one of the first cylindrical member and the second cylindrical member to one of a device, an instrument, a table and a support surface;
at least one of the first cylindrical member and the second cylindrical member has a thread which facilitates attachment of one of the first cylindrical member and the second cylindrical member to mating threads of one of a device, an instrument, a table and a support surface; and/or
the pressure to be applied to the plurality of bearings captively retained within the first bearing track is one half (½) pound of pressure and about twenty (20) pounds of pressure.

12. The integrated bearing assembly according to claim 1, **characterized in that** the at least one retaining element is resilient biased toward engagement with the plurality of bearings.

13. The integrated bearing assembly according to claim 1, **characterized by** one or more of the following:
the integrated bearing assembly comprises the single bearing track for a low profile application where a height of the integrated bearing assembly is less than a maximum width dimension of the integrated bearing assembly; and/or
the integrated bearing assembly comprises a pair of spaced apart bearing tracks when a height of the integrated bearing assembly is greater than a maximum width dimension of the integrated bearing assembly.

14. A method of assembling an integrated bearing assembly which facilitates rotation of first and second members relative to one another, the method comprising the steps of:
axially spacing first and second cylindrical members apart from one another along an axis of rotation;
supporting a first portion of a first bearing track, via the first cylindrical member, and supporting a second mating portion of the first bearing track, via the second cylindrical member;
locating the first and the second portions of the first bearing track adjacent to and facing one another to form the first bearing track, and retaining a plurality of bearing elements within the first bearing track to facilitate relative rotation of the first and the second cylindrical members with respect to one another;
at least one of the first and second portions of the first bearing track forming a pair of adjacent V-shaped bearing surfaces; and
supporting at least one adjustable retaining element, having a bearing surface which forms at least a portion of one of the first and second portions of the first bearing track, via one of the first and the second cylindrical members, and adjusting a position of the at least one adjustable retaining element, in a direction parallel to the axis of rotation, for adjusting a pressure to be applied to the plurality of bearings captively retained within the first bearing track.

15. An integrated bearing assembly comprising:
first and second cylindrical members radially spaced apart from one another about an axis of rotation with the first and second cylindrical members together defining a first bearing track therebetween;
a plurality of bearing elements being retained within the first bearing track to facilitate relative rotation of the first and the second cylindrical members with respect to one another;
the first bearing track being defined by at least first, second and third bearing surfaces, with two of the first, the second and the third bearing surfaces forming a pair of adjacent V-shaped bearing surfaces, one of the first, the second and the third bearing surfaces being supported by a retaining element, and the retaining element bering adjustable, in a direction parallel to the axis of rotation, for adjusting a pressure to be applied to the plurality of bearings captively retained by the first bearing track.
